Europäisches Patentamt

European Patent Office

Office européen des brevets

(19)

(11) Veröffentlichungsnummer: 0 182 115
A1

(12) EUROPÄISCHE PATENTANMELDUNG

(21) Anmeldenummer: 85113306.6

(22) Anmeldetag: 19.10.85

(51) Int. Cl.⁴: **F21M 1/00** , F21V 9/00 ,
G02B 5/00 , G02B 21/10

(30) Priorität: 23.10.84 CH 5072/84

(43) Veröffentlichungstag der Anmeldung:
28.05.86 Patentblatt 86/22

(84) Benannte Vertragsstaaten:
AT CH DE FR GB IT LI

(71) Anmelder: WILD HEERBRUGG AG.

CH-9435 Heerbrugg(CH)

(72) Erfinder: Rottermann, Rudolf
Nelkenweg 9
CH-9442 Berneck(CH)
Erfinder: Spirig, Werner
Bogenstrasse 3
CH-9442 Berneck(CH)
Erfinder: Schoenenberger, Bernhard
Moosweg 10
CH-9445 Rebstein(CH)

(74) Vertreter: EGLI-EUROPEAN PATENT ATTORNEYS
Horneggstrasse 4
CH-8008 Zürich(CH)

(54) **Einrichtung zur Dunkelfeldbeleuchtung.**

(57) Die Einrichtung enthält einen Torusspiegel (9), in dem eine Lichtquelle (1) angeordnet ist. Zwischen dieser Lichtquelle (1) und dem Torusspiegel (9) ist ein Ring (7) aus Glas angeordnet, dessen äussere Mantelfläche so ausgebildet ist, dass sie palisadenartig angeordnete Zylinderlinsen (8) aufweist.

Mit Hilfe einer solchen Einrichtung kann die gesamte Fläche des Objektfeldes gleichmässig beleuchtet werden und zugleich lässt sich eine solche Einrichtung kostengünstig herstellen.

EP 0 182 115 A1

Einrichtung zur Dunkelfeldbeleuchtung

Die vorliegende Erfindung betrifft eine Einrichtung zur Dunkelfeldbeleuchtung, insbesondere für Stereomikroskope und Makroskope, mit einem Torusspiegel, wobei sich in der Mitte dieses Spiegels eine Lichtquelle befindet.

Aus DE-PS 2422417 ist eine Dunkelfeldbeleuchtungseinrichtung bekannt, die einen Ringspiegel aufweist, in dessen Mitte sich eine Glühbirne als Lichtquelle befindet. Diese bekannte Einrichtung hat den Nachteil, dass jeder Lichtstrahl auch die optische Achse der Einrichtung schneidet. Infolgedessen werden Punkte ausserhalb des Gesichtsfeldmittelpunktes schwächer und zudem werden sie nur aus radialer Richtung beleuchtet.

Dieser nachteilige Effekt tritt bei einer im Prospekt "Dunkelfeld mit dem Stereomikroskop", Nr. M1 117d-XI.73, beschriebenen Beleuchtungseinrichtung der Firma Wild Heerbrugg AG nicht so deutlich auf, weil bei dieser bekannten Einrichtung sich zwischen der Lichtquelle und dem Objektfeld ein polygonförmiger Spiegelkranz befindet. Um eine richtungsunabhängige Beleuchtung des Objektes zu erreichen, müsste die Anzahl der Teilflächen des Polygonspiegels gross sein. Dies würde dann aber zu einem kleinen Leuchtfeld oder aber zu einer voluminösen Anordnung führen. Praxisgerecht optimierte Ausführungen des Polygonspiegels weisen etwa 10 Teilflächen auf.

Das Ziel der vorliegenden Erfindung ist es, die genannte Einrichtung zur Dunkelfeldbeleuchtung so zu gestalten, dass sie kostengünstig herstellbar ist, dass das Gesichtsfeld homogen und richtungsunabhängig ausgeleuchtet wird und dass als Lichtquelle eine handelsübliche Glühbirne geringer Leistung verwendet werden kann.

Diese Aufgabe wird bei der Einrichtung der eingangs genannten Art erfindungsgemäss so gelöst, wie dies im kennzeichnenden Teil des Anspruchs 1 definiert ist.

Nachstehend werden Ausführungsbeispiele der vorliegenden Einrichtung anhand der beiliegenden Zeichnungen näher erläutert. Es zeigt:

Fig. 1 in einem Schnitt entlang der optischen Achse eine erste Ausführungsform der vorliegenden Einrichtung, welche konkave Zylinderlinsen aufweist,

Fig. 2 in einer Draufsicht die Einrichtung nach Fig. 1,

Fig. 3 in einem Schnitt entlang der optischen Achse eine zweite Ausführungsform der vorliegenden Einrichtung, welche konvexe Zylinderlinsen aufweist und

Fig. 4 in einer Draufsicht die Einrichtung nach Fig. 3.

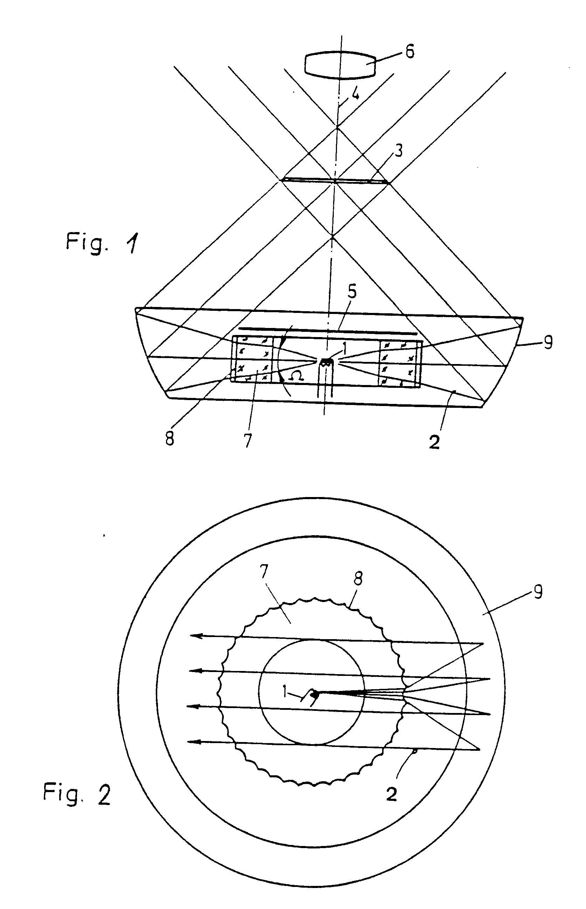

Die in den Fig. 1 bis 4 dargestellte Einrichtung enthält einen tonnenförmigen bzw. etwa als Mantel einer Tasse ausgebildeten Torusspiegel 9 sowie eine Lichtquelle 1, die in der Mitte des Torusspiegels 9 angeordnet ist. Die Rotationsachse des Spiegels 9 fällt mit der optischen Achse 4 der Einrichtung zusammen und die Lichtquelle 1 liegt somit auf der optischen Achse der Einrichtung. Auf der optischen Achse 4 der Einrichtung liegen auch das Objektfeld 3, das Objektiv 6 sowie weitere Teile das Mikro-bzw. Makroskopes.

Zwischen der Lichtquelle 1 und dem Torusspiegel 9 befindet sich in diesem angeordnet eine lichtstreuende Struktur. Die in Fig. 1 und 2 dargestellte Struktur enthält ein kurzes Stück Glasrohr 7, das die Lichtquelle 1 ringförmig umgibt. Dieses Rohrstück 7 ist vorteilhaft ein Pressling, der sich kostengünstig und in grossen Stückzahlen herstellen lässt.

Die äussere Mantelfläche des Rohrstückes 7 ist so geformt, dass sie palisadenartig angeordnete Zylinderlinsen 8 auf weist. Die bei dieser Ausführungsform der Erfindung verwendeten Zylinderlinsen sind konkav. Die jeweilige Zylinderlinse 8 bildet die Lichtquelle 1 in die Mitte zwischen der Optikachse 4 und dem Torusspiegel 9 strichförmig ab. Wie aus Fig. 2 ersichtlich ist, liegt die Lichtquellenabbildung auf einer Brennlinie des Torusspiegels 9. Die Krümmung des Torusspiegels 9 ist so gewählt, dass sich die Lichtquelle 1 im Brennpunkt jener Strahlen befindet, die die optische Achse 4 schneiden (Fig. 1). Diese zwei Massnahmen gewährleisten, dass das Objektfeld 3 mit parallelen Strahlen beleuchtet wird. Dadurch ist die Beleuchtungsintensität überall im Objektfeld 3 gleich gross, obwohl die Beleuchtungsstrahlen nicht rechtwinklig auf das Objektfeld 3 fallen.

Die Brennkraft der Zylinderlinsen ist so gewählt, dass das (Fig. 2) durch die Zylinderlinsen 8 begrenzte Strahlenbüschel beim Torusspiegel 9 bereits auf den Objektfelddurchmesser aufgeweitet ist. Dadurch wird das ganze Objektfeld 3 von den Strahlen einer Zylinderlinse aus einer Richtung beleuchtet. Durch die Ueberlagerung der Wirkung vieler und um die Lichtquelle 1 herum verteilten Zylinderlinsen 8 entsteht im Objektfeld 3 eine quasi richtungsunabhängige Beleuchtung. Je mehr Zylinderlinsen 8 das Rohrstück 7 trägt, um so gleichmässiger wird das Objektfeld 3 beleuchtet.

Um die Wärmebelastung des Objektes 3 durch den infraroten Anteil der Strahlung 2 zu reduzieren, kann das Rohrstück 7 mit den Linsen 8 aus infrarotabsorbierendem Glas hergestellt sein. Aus gleichem Grund kann der Torusspiegel 9 als Kaltlichtspiegel ausgeführt sein.

Die Anordnung die Lichtquelle 1 und des die Zylinderlinsen 8 tragenden oder aufweisenden Glasringes 7 im inneren des Torusspiegels 9 bringt unter anderem auch die Vorteile mit sich, dass die Höhe der vorliegenden Anordnung klein ge halten werden kann und dass der Raum zwischen dem Torusspiegel 9 und der Objektebene 3 für weiteres Zubehör, wie z.B. für Filter oder Kreuztische, frei bleibt. Zudem ist die Lichtausbeute höher, weil durch den grösseren Raumwinkel Omega ein grösserer Anteil des von der Lichtquelle 1 ausgestrahlten Lichts in die Objektebene 3 geleitet wird.

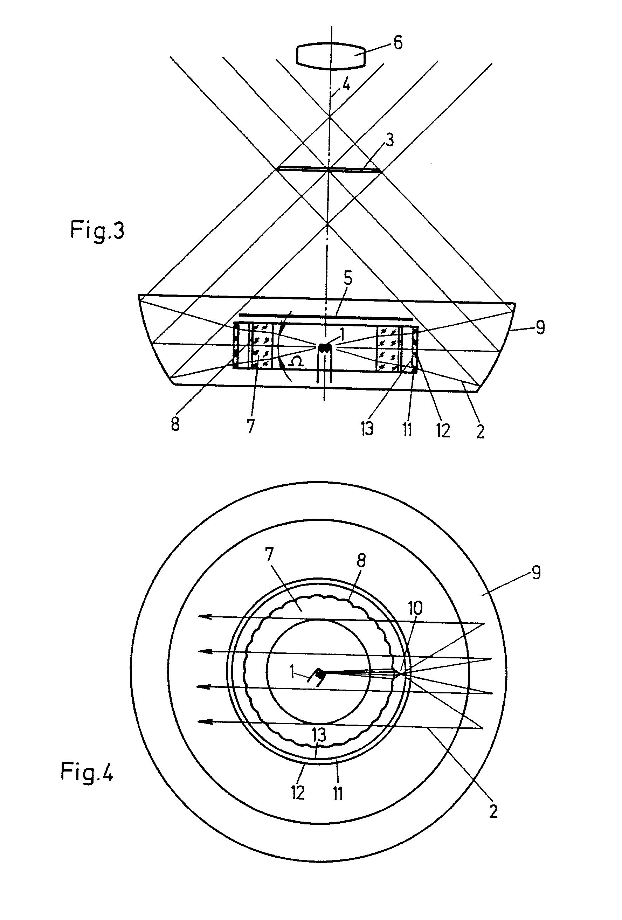

Die Zylinderlinsen 8 können konvex oder konkav sein. In Fig. 3 und 4 ist eine weitere Ausführungsform der vorliegenden Einrichtung dargestellt, die sich von der in den Fig. 1 und 2 dargestellten Einrichtung vor allem dadurch unterscheidet, dass die Zylinderlinsen 8 konvex sind. In diesem Fall kann die Dicke des Rohrstückes 7 kleiner sein als bei der vorstehenden Ausführungsform der vorliegenden Einrichtung. Das jeweilige strichförmige Bild 10 der Lichtquelle 1 ist bei der Verwendung konvexer Linsen 8 reell. Das Lichtquellenbild ist bei der ersten Ausführungsform der vorliegenden Einrichtung dagegen virtuell, wie aus Fig. 2 hervorgeht.

Bei der Ausführungsform nach Fig. 3 und 4 kann es unter Umständen stören, dass das Bild 10 der Lichtquelle 1 zu scharf ist und dass es in die Objektebene 3 durch den Torusspiegel 9 als ein verhältnismässig scharfer Strich projiziert wird. In solchen Fällen kann man zwischen dem Rohrstück 7 und dem Torusspiegel 9 ein Stück Glasrohr 11 anordnen. Wenigstens eine der Oberflächen 12 oder/und 13 dieses Rohrstückes 11 kann mattiert sein, um die diskreten, strichförmigen Lichtquellenbilder zu verschleiern und um dadurch die Gleichmässigkeit der Dunkelfeldbeleuchtung zu steigern.

Die Intensität der Lichtstreuung kann durch die Mattierung bestimmt werden. Wenn eine nur kleine Lichtstreuung erforderlich ist, so kann man nur eine der Oberflächen 12 oder 13 des Glasrohres 11 mattiert ausführen. Ferner kann man die Lichtstreuung auch durch die Art der Mattierung ändern. Für die Fälle, in welchen eine nur geringe Lichtstreuung erforderlich ist, kann die Oberfläche des Glasrohres 11 beispielsweise durch die Behandlung mit Fluorwasserstoff mattiert werden. Für intensivere Lichtstreuungen kann man das Glasrohr 11 in mechanischer Weise mattieren.

Die Anzahl der sich am Rohrstück 7 befindlichen Zylinderlinsen 8 ist nur durch fertigungstechnische Grenzen beschränkt. Aus herstellungstechnischen Gründen scheinen die konkaven Zylinderlinsen 8 vorteilhafter zu sein. Die lichtstreuende Struktur (7,8) kann vorteilhaft als ein Pressling ausgeführt sein.

Bei geringen Ansprüchen an die Qualität der Ausführung der vorliegenden Einrichtung kann der Glasring 7 mit den Zylinderlinsen 8 wegfallen, so dass sich nur das beschriebene Glasrohr zwischen der Lichtquelle 1 und dem Torusspiegel 9 befindet.

**Ansprüche**

1. Einrichtung zur Dunkelfeldbeleuchtung, insbesondere für Stereomikroskope und Makroskope, mit einem Torusspiegel, wobei sich in der Mitte dieses Spiegels eine Lichtquelle befindet, dadurch gekennzeichnet, dass zwischen der Lichtquelle (1) und dem Torusspiegel (9), der tonnenförmig ist, eine lichtstreuende Struktur angeordnet ist.

2. Einrichtung nach Anspruch 1, dadurch gekennzeichnet, dass die lichtstreuende Struktur palisadenartig angeordnete Zylinderlinsen (8) enthält, welche die Lichtquelle in die Mitte zwischen der optischen Achse (4) und dem Torusspiegel (9) strichförmig abbilden.

3. Einrichtung nach Anspruch 2, dadurch gekennzeichnet, dass die Zylinderlinsen (8) durch die entsprechend geformte äussere Mantelfläche eines rohrförmigen optischen Elementes (7) gebildet sind und dass sich die Lichtquelle (1) im Inneren dieses Elementes (7) befindet.

4. Einrichtung nach Anspruch 2, dadurch gekennzeichnet, dass die lichtstreuende Struktur ein Rohrstück (11) aufweist, bei dem wenigstens eine der Oberflächen (12 oder/und 13) desselben mattiert ist.

5. Einrichtung nach Anspruch 4, dadurch gekennzeichnet, dass die lichtstreuende Struktur aus infrarotabsorbierendem Glas hergestellt ist.

6. Einrichtung nach den Ansprüchen 3 und 4, bei der die Zylinderlinsen konvex sind, dadurch gekennzeichnet, dass das Rohrstück, das das optische Element (7) umgibt, sich in einem Abstand von diesem befindet.

7. Einrichtung nach Anspruch 1, dadurch gekennzeichnet, dass der Torusspiegel (9) als Kaltlichtspiegel ausgeführt ist.

8. Einrichtung nach Anspruch 2, dadurch gekennzeichnet, dass die Brechkräfte der Zylinderlinsen (8) und des Torusspiegels (9) so bemessen sind, dass das ganze Objektfeld (3) durch jede der Zylinderlinsen (8) mit parallelen Strahlen (2) beleuchtbar ist.

9. Einrichtung nach Anspruch 1, dadurch gekennzeichnet, dass die lichtstreuende Struktur (7,8) als ein Pressling ausgeführt ist.

Fig. 1

Fig. 2

0 182 115

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 341 640 (ANCIENS ETABLISSEMENTS BARBIER, BENARD & TURENNE) * Seite 1, Spalte 1, Zeilen 13-38; Figuren 1-6 * | 1-3,6, 8 | F 21 M 1/00<br>F 21 V 9/00<br>G 02 B 5/00<br>G 02 B 21/10 |
| | --- | | |
| Y | US-A-3 920 311 (H. TSUDA et al.) * Spalte 1, Zeileen 15,16; Spalte 2, Zeilen 61-63; Figur 5 * | 1-3,6, 8 | |
| | --- | | |
| A | FR-A-2 372 380 (SOCIETE PARISIENNE DES ANCIENS ETABLISSEMENTS BARBIER, BENARD & TURENNE) * Insgesamt * | 1 | |
| | --- | | |
| A | US-A-4 254 455 (E.J. NEAL) * Insgesamt * | 1,7 | RECHERCHIERTE SACHGEBIETE (Int. Cl.4) |
| | ----- | | G 02 B 5/00<br>G 02 B 19/00<br>G 02 B 21/00<br>F 21 M 1/00<br>F 21 V 9/00 |

Der vorliegende Recherchenbericht wurde für alle Patentansprüche erstellt.

| Recherchenort | Abschlußdatum der Recherche | Prüfer |
|---|---|---|
| DEN HAAG | 20-01-1986 | WESBY P.B. |